# EUROPEAN PATENT APPLICATION

(11) **EP 3 211 427 A1**
(43) Date of publication of application: **30.08.2017**
(21) Application number: 16157465.2
(22) Date of filing: 25.02.2016
(51) Int. Cl.: G01N 35/04, B01L 9/06

(54) **SAMPLE CONTAINER CARRIER**

(71) Applicant: Roche Diagnostics GmbH, 68305 Mannheim (DE); F. Hoffmann-La Roche AG, 4070 Basel (CH)
(72) Inventor: KÄPPELI, Marcel, 5634 Merenschwand (CH); HERMANN, Pius, 6280 Urswil (CH)
(74) Representative: Patentanwälte Ruff, Wilhelm, Beier, Dauster & Partner mbB

(57) **Abstract**

The invention relates to a sample container carrier for transporting sample containers, for example test tubes and/or vials, in a laboratory automation system, the sample container carrier comprising a basic body (2) having a hollow (20) with a central axis (A), wherein the hollow (20) is adapted for receiving a lower end of a sample container (10), and at least three resiliently deformable and/or displaceable upper retaining elements (3), wherein the upper retaining elements (3) are distributed about the central axis (A) and adapted to clamp a sample container (10) inserted in the hollow (20) of the basic body (2), and wherein the upper retaining elements (3) are made of a plastic material. The invention further relates to a method for manufacturing a sample container carrier, wherein that at least the upper retaining elements (30) are formed by injection molding. In addition, the invention relates to a laboratory sample distribution system having a number of sample container carriers, and a laboratory automation system comprising a laboratory sample distribution system.

## Description

### TECHNICAL FIELD AND PRIOR ART

The invention relates to a sample container carrier for transporting sample containers, for example test tubes and/or vials, in a laboratory automation system. The invention further relates to a method for manufacturing a sample container carrier. In addition, the invention relates to a laboratory sample distribution system having a number of sample container carriers, and a laboratory automation system comprising a laboratory sample distribution system.

A laboratory automation system comprises a number of pre-analytical, analytical and/or post-analytical stations, in which samples, for example blood, saliva, swab and other specimens taken from the human body, are processed. It is generally known to provide various containers, such as test tubes or vials, containing the samples. The test tubes are also referred to as sample tubes. In the context of the application, containers such as test tubes or vials for containing a sample are referred to as sample containers.

Several sample containers can be placed in so-called racks for a handling. In an alternative distribution system, sample containers are place in an upright or vertical position in so called sample container carriers or pucks having a retaining area for retaining sample containers. Sample container carriers are disclosed among others in US 6,274,092 B1, US 6,971,506 B2, US 7,485,264 B2, US 8,147,778 B2 and EP 0 916 406 A2.

Generally, in laboratory automation systems different kinds of sample containers are handled, in particular test tubes and/or vials of different diameters. It is further known to control the transport of the sample containers and/or a treatment of the sample contained in the sample container by means of a bar code provided on an outside surface of the sample container. For this purpose, the bar code should be readable during the transport and/or at all handling stations without the necessity to remove the sample container from the carrier.

### SUMMARY OF THE INVENTION

It is the object of the invention to provide a sample container carrier for transporting sample containers and a method for manufacturing said sample container carrier allowing for a cost-efficient manufacturing. It is further the object of the invention to provide a laboratory sample distribution system having a number of cost-efficiently manufactured sample container carriers, and a laboratory automation system comprising a laboratory sample distribution system.

These objects are solved by the sample container carrier, the method for manufacturing a sample container carrier, the laboratory sample distribution system, and the laboratory automation system with the features of claims 1, 13, 14 and 15. Preferred embodiments are defined in the dependent claims.

According to a first aspect, a sample container carrier for transporting sample containers in a laboratory automation system is provided, the sample container carrier comprising a basic body having a hollow with a central axis, wherein the hollow is adapted for receiving a lower end of a sample container, and at least three resiliently deformable and/or displaceable upper retaining elements, wherein the upper retaining elements are distributed about the central axis and adapted to clamp a sample container inserted in the hollow of the basic body in an area above said hollow, and wherein the upper retaining elements are made of a plastic material.

A sample container carrier having retaining elements with elastic properties can be manufactured cost-efficiently. In particular, the upper retaining elements could be manufactured as integral parts with other elements by means of injection molding, wherein the number of assembly steps can be reduced.

In order to provide sample container carriers that are not only cost-efficient in manufacturing, but also enjoy a long life and are apt for retaining a wide range of sample containers of different sizes, in one embodiment, the upper retaining elements are made of molding compounds on the basis of a polyamide chosen from the group comprising PA6, PA66, PA610, polyamide NDT/INDT and copolymers thereof. In particular, suitable materials are commercially available under the trade names BASF Ultramid® S3K Balance, BASF Ultramid® NBX-0025 NF2001, BASF Ultramid® A3K, cond.. Evonik Trogamid® CX9710 nc (nf). However, the invention is not limited to these materials. Other materials are conceivable that have good elastic properties and dimensional stability as well as a low tendency to creep.

In one embodiment, the upper retaining elements and the basic body are formed as an integral element of one plastic material or as an integral element by multiple-component injection molding. When manufacturing the upper retaining elements and the basic body of one plastic material, proper construction techniques have to be applied and the material has to be chosen properly to ensure for sufficient stability of the basic body and sufficient elasticity of the retaining elements. When manufacturing the elements by means of multiple-component injection molding, the material may be chosen for each element individually.

The design of the elements is adapted by the person skilled in the art in order to allow for a cost-efficient manufacturing by means of injection molding. To this end, in one embodiment, the basic body comprises a sleeve having cutouts for injection molding inserts and/or injection molding dies used in manufacturing of the sample container carrier.

In one embodiment, the upper retaining elements comprise a hooked portion having a vertex directed towards the central axis and a distal end pointing at least essentially upwards. This design is advantageous both for ensuring a reliable clamping and a manufacturing by means of injection molding.

In accordance with one embodiment, the sample container carrier further comprises a plurality of lower retaining elements made of a plastic material, which are arranged at least partly in the hollow. The lower retaining elements enhance a secure positioning of the sample container in the hollow.

In view of manufacturing constraints, in particular embodiments, the lower retaining elements are arranged in the regions radially inwards of the cutouts. This is in particular advantageous, in case the upper retaining elements and the lower retaining elements are formed as an integral element of one plastic material or as an integral element by multiple-component injection molding.

In one embodiment, the upper retaining elements and the lower retaining elements are arranged in an alternating sequence about the central axis. The number of upper and lower retaining elements differs in one embodiment, wherein for example two lower retaining elements are arranged between two upper retaining elements. In preferred embodiments, the number of upper and lower retaining elements is the same and the elements are equally spaced about the central axis.

In alternative or in addition, in one embodiment the basic body further comprises a number of ribs projecting from an inner shell surface of the hollow and serving as radial contact surfaces for the sample container, wherein in particular the upper retaining elements and the ribs are arranged such that in each case one upper retaining element and one rib are aligned in a direction parallel to the central axis.

In one embodiment, the ribs have a tapered contact surface for guiding a lower end of a sample container upon the insertion. In preferred embodiments, the ribs are at least partly moveable in radial direction with respect to the inner shell surface of the hollow.

In alternative to a number of lower retaining elements, in other embodiments the sample container carrier further comprises a cup shaped lower retaining element made of a plastic material, which is arranged at least partly in the hollow. The cup shaped lower retaining element in preferred embodiments is made from an easily stretchable material for allowing the insertion and clamping of a large variety of sample containers of different sizes. In alternative, the cup shaped lower retaining element is provided with slits dividing the cup shaped lower retaining element into a plurality of sections, which are independently moveable radially outwards.

The sample container carrier in one embodiment further comprises a sliding disc. The sliding disc is adapted for moving the sample container carrier over a transport plane, wherein at least a bottom surface of the sliding disc is made of or coated with a suitable material. The basic body in one embodiment is mounted to the sliding disc, for example by means of a snap-fit connection. In other embodiments, the sliding disc is formed at least partly as an integral element with the basic body.

According to a second aspect, a method of manufacturing a sample container carrier is provided, wherein at least the upper retaining elements are formed of a plastic material by injection molding. Preferably, a sample container carrier is manufactured, wherein the number of parts to be assembled is minimized by forming the upper retaining elements as an integral component together with at least one other element of the sample container carrier chosen from the group comprising the basic body, lower retaining elements, ribs and the sliding disc.

According to a third aspect, a laboratory sample distribution system having a number of sample container carriers is provided. The distribution system for example comprises a transport plane with a number of magnetic actuators for generating a magnetic field such that a driving force is applied to each of the sample container carriers for transporting the sample container carriers. Such a system is described for example in WO 2013/064656 A1 incorporated herein by reference. The distribution system in alternative or in addition in one embodiment comprises additional conveyor devices for moving a sample container carrier along a defined path.

According to a fourth aspect, a laboratory automation system with a number of pre-analytical, analytical and/or post-analytical stations, and with a distribution system having a number of sample container carriers is provided.

### BRIEF DESCRIPTION OF THE DRAWINGS

In the following, an embodiment of the invention will be described in detail with reference to the drawings. Throughout the drawings, the same or similar elements will be denoted by the same reference numerals.
- Fig. 1:: a side view of a first embodiment of a sample container carrier for transporting sample containers retaining a sample container,
- Fig. 2:: a side view of the sample container carrier of Fig. 1,
- Fig. 3:: a top view of the sample container carrier of Fig. 2,
- Fig. 4:: a sectional view along line IV-IV of the sample container carrier of Fig. 3,
- Fig. 5:: a perspective view of a second embodiment of a sample container carrier for transporting sample containers,
- Fig. 6:: a side view of the sample container carrier of Fig. 5,
- Fig. 7:: a top view of the sample container carrier of Fig. 5, and
- Fig. 8:: a sectional view along line VIII- VIII of the sample container carrier of Fig. 7.

### DETAILED DESCRIPTION OF EMBODIMENTS OF THE INVENTION

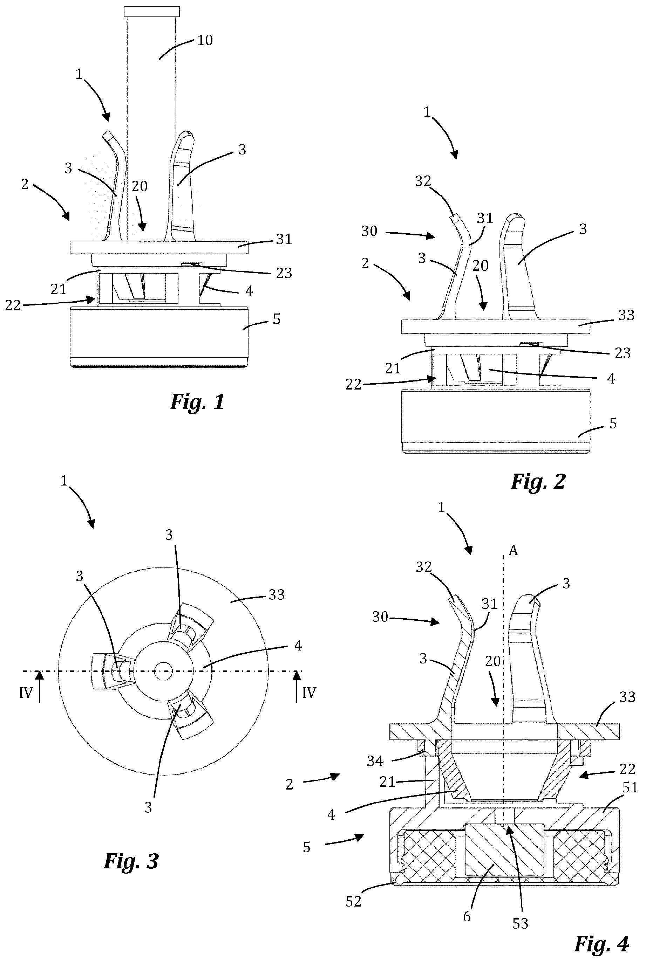

Figs. 1 to 4 show a first embodiment of a sample container carrier 1 for transporting sample containers 10 (see Fig. 1).

The sample container carrier 1 shown in Figs. 1 to 4 comprises a basic body 2 having a hollow 20 with a central axis A, three resiliently deformable and displaceable upper retaining elements 3, a cup shaped lower retaining element 4 arranged in the hollow 20, and a sliding disc 5.

All elements are made of a plastic material, in particular made by injection molding of molding compounds on the basis of a polyamide chosen from the group comprising PA6, PA66, PA610, polyamide NDT/INDT and copolymers thereof. The elements 2, 3, 4, 5 of the sample container carrier 1 or parts thereof can be formed as integral components with other elements 2, 3, 4, 5 of the sample container carrier 1 or parts thereof.

The basic body 2 comprises a sleeve 21 surrounding the hollow, wherein the sleeve 21 has cutouts 22 for injection molding inserts or injection molding dies (not shown) used in manufacturing of the sample container carrier 1.

The sliding disc 5 comprises two coupled elements 51, 52 accommodating in-between them a magnetically active element 6, which is adapted to interact with a magnetic field such that a driving force is applied to the sample container carrier 1. In the embodiment shown, due to production-related issues, an upper element 51 of the sliding disc 5 is provided with a hole 53. In other embodiments, this hole is avoided.

In the embodiment shown, the upper element 51 of the sliding disc 5 is formed integrally with the basic body 2. In other embodiments, the elements are formed separately and assembled for example by means of a snap-fit connection and/or by gluing or welding.

The upper retaining elements 3 each comprise a hooked portion 30 having a vertex 31 directed toward the central axis A and a distal end 32 pointing at least essentially upwards. In the embodiment shown, the three upper retaining elements 3 are formed as a common component and linked by means of a ring-shaped disc 33. The size of the ring-shaped disc 33 is chosen such that the disc 33 projects in radial direction from the sleeve 21 for forming a rim such that a guiding groove for interacting with conveyor elements such as rails, hooks or the like of a laboratory sample distribution system (not shown) is provided.

In the embodiment shown, the component with the upper retaining elements 3 and the basic body 2 are manufactured as separate elements and coupled by means of a snap-fit connection. For this purpose, the component with the upper retaining elements 3 comprises three snap-in hooks 34 interacting with slots 23 provided on the sleeve 21. The cup shaped lower retaining element 4 is inserted between the component with the upper retaining elements 3 and the based body 2. In other embodiments, all three components are formed integrally by injection molding, wherein in one embodiment the carrier is manufactured by means of multiple-component injection molding. In this case, in particular the cup shaped lower retaining element 4 is made of a material having a higher elasticity than the other elements.

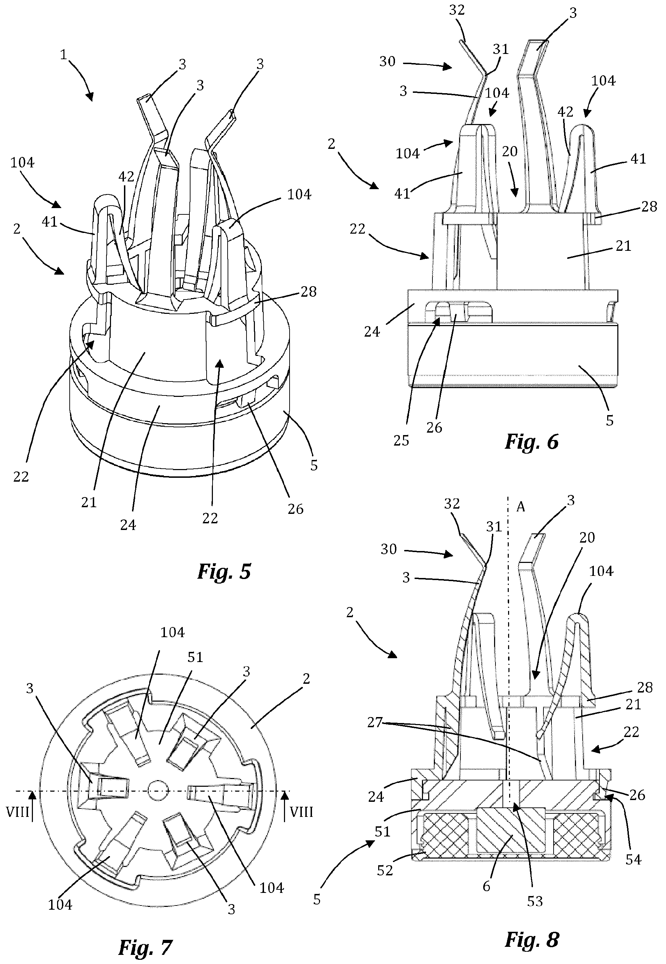

Figs. 5 to 8 show a second embodiment of a sample container carrier 1 for transporting sample containers 10 (see Fig. 1), comprising a basic body 2 having a hollow 20 with a central axis A, three resiliently deformable and displaceable upper retaining elements 3, three resiliently deformable and displaceable lower retaining elements 104 arranged at least partly in the hollow 20, and a sliding disc 5.

The hollow 20 is adapted for accommodating a lower end of a sample container (not shown in Figs. 5 to 8), wherein the sample container is clamped by means of the first and the second retaining elements 3, 104 at two different heights.

In the embodiment shown in Figs. 5 to 8, also all elements are made of a plastic material, in particular made by injection molding of molding compounds on the basis of a polyamide chosen from the group comprising PA6, PA66, PA610, polyamide NDT/INDT and copolymers thereof, wherein the upper retaining elements 3, the lower retaining elements 104 and the basic body are formed as an integral component. In particular, they are formed as an integral component by means of injection molding of one molding compound. This integral component is mounted to the sliding disc 5.

The sliding disc 5 comprises an upper element 51 and a lower element 52 accommodating in-between them a magnetically active element 6, which is adapted to interact with a magnetic field such that a driving force is applied to the sample container carrier 1. Due to production-related issues, in the embodiment shown, the upper element 51 of the sliding disc 5 is provided with a hole 53. In other embodiments, no such hole is provided.

The basic body 2 comprises a first sleeve 21 surrounding the hollow 20, which first sleeve 21 is provided with cutouts 22 for injection molding inserts or injection molding dies (not shown). The basic body 2 further comprises a second sleeve 24, which serves as a mounting sleeve for mounting the basic body 2 to the sliding disc 5. The mounting sleeve 24 is provided with cutouts 25 for forming snap-in hooks 26, which snap-in hooks 26 interact with a groove 54 provided on the upper element 51 of the sliding disc 5. The outer diameter of the mounting sleeve 24 corresponds to the outer diameter of the sliding disc 5.

The basic body 2 further comprises a number of ribs 27 radially projecting from an inner shell surface of the sleeve 21 surrounding the hollow 20 and serving as radial contact surfaces for the sample container 10 (see Fig. 1). The upper retaining elements 3 and the ribs 27 are arranged such that in each case one upper retaining element 3 and one rib 27 are aligned in a direction parallel to the central axis A.

A front edge of the ribs 27 extends at least essentially in parallel to the central axis A. In order to ease a guidance of a sample container upon insertion into the hollow 20, the ribs 27 are only partly connected to the sleeve 21. More particular, in the embodiment shown, the ribs 27 are connected only at their upper ends to the sleeve 21. Hence, the ribs 27 are within small limits moveable in radial direction with respect to the inner shell surface of the sleeve 21 surrounding the hollow 20.

In the embodiment shown, in the lower retaining elements 104 and the ribs 27, and the lower retaining elements 104 and the upper retaining elements 3 are arranged in an alternating sequence about the central axis A.

The upper retaining elements 3 project upwards from an upper edge of the sleeve 21 and comprise a hooked portion 30 having a vertex 31 directed towards the central axis A and a distal end 32 pointing at least essentially upwards.

In the embodiment shown, the lower retaining elements 104 are V-shaped, having a first leg 41 and a second leg 42 of different length. The first legs 41 project upwards from the upper edge of the sleeve 21. They are shorter than the upper retaining elements 3. The second legs 42 project downwards and extend into the hollow 20. A sample container 10 inserted into the hollow 20 contacts at least distal ends of the second legs 42.

In contrast to the first embodiment, in the embodiment of Figs. 5 to 8 no circumferential rim is provided at the upper edge of the sleeve 21, in order to allow for a design of the sample container carrier 1 that minimizes undercuts. Instead of such a rim, projections 28 extending radially outwards are provided at an upper edge of the sleeve 21 surrounding the hollow 20, which projections 28 together with the mounting sleeve 22 form a guide groove allowing a movement of the sample container carrier 1 with or without a sample container 10 along a rail or a similar element of a laboratory sample distribution system (not shown).

It will be apparent that the embodiments shown are only exemplary and that various modifications can be made in construction and arrangement within the scope of the invention as defined in the appended claims.

## Claims

1. Sample container carrier for transporting sample containers (10) in a laboratory automation system comprising:
- a basic body (2) having a hollow (20) with a central axis (A), wherein the hollow (20) is adapted for receiving a lower end of a sample container (10), and
- at least three resiliently deformable and/or displaceable upper retaining elements (3), wherein the upper retaining elements (3) are distributed about the central axis (A) and adapted to clamp a sample container (10) inserted in the hollow (20) of the basic body (2) in an area above said hollow (20), **characterized in that** the upper retaining elements (3) are made of a plastic material.

2. Sample container carrier of claim 1, **characterized in that** the upper retaining elements (3) are made of molding compounds on the basis of a polyamide chosen from the group comprising PA6, PA66, PA610, polyamide NDT/INDT and copolymers thereof.

3. Sample container carrier of claim 1 or 2, **characterized in that** the upper retaining elements (3) and the basic body (2) are formed as an integral element of one plastic material or as an integral element by multiple-component injection molding.

4. Sample container carrier according to claim 1, 2 or 3, **characterized in that** the basic body (2) comprises a sleeve (21) having cutouts (22) for injection molding inserts and/or injection molding dies used in manufacturing of the sample container carrier (1).

5. Sample container carrier according to any one of claims 1 to 4, **characterized in** the upper retaining elements (3) comprise a hooked portion (30) having a vertex (31) directed towards the central axis (A) and a distal end (32) pointing at least essentially upwards.

6. Sample container carrier according to any one of claims 1 to 5, **characterized in that** the sample container carrier (1) further comprises a plurality of lower retaining elements (104) made of a plastic material, which are arranged at least partly in the hollow (20), in particular which are arranged in the regions radially inwards of the cutouts (22).

7. Sample container carrier according to claim 6, **characterized in that** the upper retaining elements (3) and the lower retaining elements (104) are formed as an integral element of one plastic material or as an integral element by multiple-component injection molding.

8. Sample container carrier of claim 6 or 7, **characterized in that** the upper retaining elements (3) and the lower retaining elements (104) are arranged in an alternating sequence about the central axis (A).

9. Sample container carrier according to any one of claims 1 to 8, **characterized in that** the basic body (2) further comprises a number of ribs (27) projecting from an inner shell surface of the hollow (20) and serving as radial contact surfaces for the sample container (10), wherein in particular the upper retaining elements (3) and the ribs (27) are arranged such that in each case one upper retaining element (3) and one rib (27) are aligned in a direction parallel to the central axis (A).

10. Sample container carrier of claim 9, **characterized in that** the ribs (27) are at least partly moveable in radial direction with respect to the inner shell surface of the hollow (20).

11. Sample container carrier according to any one of claims 1 to 5, **characterized in that** the sample container carrier (1) further comprises a cup shaped lower retaining element (4) made of a plastic material, which is arranged at least partly in the hollow (20).

12. Sample container carrier according to any one of claims 1 or 11, **characterized in that** the sample container carrier (1) further comprises a sliding disc (5), wherein the basic body (2) is mounted to the sliding disc (5) or wherein the sliding disc (5) is formed at least partly as an integral element with the basic body (2).

13. Method of manufacturing a sample container carrier (1) according to any one of claims 1 to 12, **characterized in that** at least the upper retaining elements (30) are formed by injection molding.

14. Laboratory sample distribution system having a number of sample container carriers (1) according to any one of claims 1 to 12.

15. Laboratory automation system with a number of pre-analytical, analytical and/or post-analytical stations, and with a distribution system according to claim 14.
